(19) Europäisches Patentamt
European Patent Office
Office européen des brevets

(11) Publication number: **0 377 387 A1**

(12) **EUROPEAN PATENT APPLICATION**

(21) Application number: **89420507.9**

(22) Date of filing: **20.12.89**

(51) Int. Cl.5: **C08L 67/00, //(C08L67/00, 23:02)**

(30) Priority: **23.12.88 US 288907**

(43) Date of publication of application: **11.07.90 Bulletin 90/28**

(84) Designated Contracting States: **ES GR**

(71) Applicant: **EASTMAN KODAK COMPANY**
**343 State Street**
**Rochester, New York 14650(US)**

(72) Inventor: **Meyer, Max Frederick, Jr. EASTMAN KODAK COMPANY**
**Patent Department 343 State Street**
**Rochester New York 14650(US)**
Inventor: **McConnell, Richard Leon EASTMAN KODAK COMPANY**
**Patent Department 343 State Street**
**Rochester New York 14650(US)**

(74) Representative: **Parent, Yves et al**
**Kodak-Pathé Département Brevets et Licences Centre de Recherches et de Technologie Zone Industrielle**
**F-71102 Chalon-sur-Saône Cédex(FR)**

(54) **Homogeneous polyester/polyolefin blend compositions.**

(57) A polyester/polyolefin blend composition, comprising (i) 98 to 60 weight % of a copolyester having an inherent viscosity (I.V.) of 0.3 to 1.2 and containing repeat units from 100 mol % of an acid comprising at least one aromatic, saturated aliphatic or saturated cycloaliphatic dibasic acid having 4 to 36 carbon atoms and 0.5 to 20%, based on the weight of the polyester, of a functional polyolefin having a saponification number of 75 or less, wherein said functional polyolefin is the reaction product of at least one homopolymer or copolymer of an a-olefin having 2 to 10 carbon atoms and at least one unsaturated acid or anhydride having 3 to 5 carbon atoms or a 1 to 10 carbon atom alkyl ester thereof, and repeat units from 100 mol % of at least one aliphatic or cycloaliphatic glycol having 2 to 12 carbon atoms. (ii) 2 to 40 weight % of an unmodified polyolefin.

EP 0 377 387 A1

Xerox Copy Centre

# HOMOGENEOUS POLYESTER/POLYOLEFIN BLEND COMPOSITIONS

## BACKGROUND OF THE INVENTION

### Field of the Invention

The present invention relates to new blends of polyolefin-modified high-molecular weight polyesters with unmodified polyolefins. These polyester/polyolefin blends are useful as barrier materials and as binder powders and fibers for nonwoven fabrics.

### Discussion of the Background

Polymer blends or polyblends are mixtures of structurally different polymers or copolymers. Commercially important polyblends are generally mechanical polyblends which are made by melt-blending the various polymers in an extruder or other suitable intensive mixer. Polymer blending technology generally rests on the premise of property additivity, wherein the polymer blend has the combined properties which are found in each of the component polymers separately. A polymer blend can therefore have properties which are unavailable to the individual polymer components by themselves.

Blending of polymers is also cost efficient. Expensive polymers may be blended with inexpensive polymers to obtain a useful polyblend which has a cost:performance ratio that makes it very attractive for any given application. The standards of performance for any given application can therefore be met using blends of two known polymers without the need to develop completely new polymers and new plant equipment. There is a continuing need for novel and useful polymer blends.

Blends of polyesters and polyolefins are normally incompatible, 2-phase systems with a relatively nonuniform distribution of the minor component in the matrix. This property results in inferior or nonuniform physical, barrier and processing properties.

U.S. 4,554,303 describes blends of polyesters with small amounts of other types of polymers such as low-molecular weight polyethylenes or polypropylenes for the purpose of enhancing the crystallization rate of copolyesters. The additives are added in very small quantities, i.e., less than 2 weight % of the polymer blend and function to increase the crystallinity and crystallization rates of the polyester.

U.S. 4,299,933 discloses copolyesters which are modified by the inclusion of a carboxylated polyolefin monomer unit. These modified copolyesters are useful as coatings and adhesive compositions.

A need continues to exist however for improved polyester/polyolefin blends which are compatible and easily processible.

## SUMMARY OF THE INVENTION

Accordingly, one object of the present invention is to provide a polyester/polyolefin blend which is compatible and in which the components are uniformly distributed throughout the polymer blend.

Another object is to provide polymer blends which exhibit superior barrier and processing properties.

These and other objects which will become apparent from the following specification have been achieved by the present polyester/polyolefin composition comprising:

(i) 98 to 60 weight % (preferably 87.5 to 60 weight %) of a copolyester having an inherent viscosity (I.V.) of 0.3 to 1.2 and containing repeat units from 100 mol % of an acid comprising at least one aromatic, saturated aliphatic or saturated cycloaliphatic dibasic acid having 4 to 36 carbon atoms and 0.5 to 20% (preferred 1.0 to 10%), based on the weight of the polyester, of a functional polyolefin having a saponification number of 75 or less, wherein said functional polyolefin is the reaction product of at least one homopolymer or copolymer of an a-olefin having 2 to 10 carbon atoms and at least one unsaturated acid or anhydride having 3 to 5 carbon atoms or a 1 to 10 carbon atom alkyl ester thereof, and repeat units from 100 mol % of at least one aliphatic or cycloaliphatic glycol having 2 to 12 carbon atoms.

(ii) 2 to 40 weight % (preferably 10 to 30) of an unmodified polyolefin.

## DETAILED DESCRIPTION OF THE PREFERRED EMBODIMENTS

The homogeneous polyester/polyolefin blends of the present invention have been made possible by the discovery that functionalized polyolefins and unmodified polyolefins can be incorporated into a polyester during the synthesis of the polyester to provide a polyester blend composition containing a high concentration of the unmodified polyolefin as

a highly dispersed, very uniform phase in a polyester maxtrix. The functionalized polyolefin is chemically combined with the polyester in the same manner as any other dicarboxylic acid monomer. The unmodified polyolefin is not chemically combined with the polyester, but rather is intimately dispersed throughout the polyester matrix thereby providing a homogeneous polyester/polyolefin blend composition.

The polyester/polyolefin blends of the present invention are useful as binder powders and binder fibers in the bonding of nonwoven fabrics, as hot-melt adhesives, as tie layers for laminated structures and as components for barrier materials, for example.

The copolyesters are derived from at least one dibasic acid, a carboxylated polyolefin as part of the acid component, and at least one saturated glycol. The copolyesters have an I.V. of 0.3 to 1.2. The copolyesters generally have melting points in the range 70° to 295° C and heats of fusion ($WH_f$) of 18 cal/g or less.

The dibasic acid component comprises at least one aromatic or saturated aliphatic or cycloaliphatic dibasic acid having 4 to 36 carbon atoms. Preferred acids include isophthalic, terephthalic, 1,4-cyclohexanedicarboxylic, 1,3-cyclohexanedicarboxylic, 1,2-cyclohexanedicarboxylic, glutaric, adipic, pimelic, suberic, azelaic, sebacic acids and the like.

The carboxylated polyolefin used in the copolyester according to this invention accounts for 0.5 to 20 weight % (preferably 1.0 to 10) of the weight of the copolyester. The dibasic acid and carboxylated polyolefin together account for 100 mole percent of the acid component of the copolyester. The carboxylated polyolefin may be obtained by reacting a poly a-olefin with at least one unsaturated acid or anhydride having from 3 to 5 carbon atoms or a 1 to 10 carbon atom alkyl ester thereof. The functionalized polyolefin so produced should have a saponification number of 75 or less, preferably in the range of 5 to 50. The molecular weight of the functionalized polyolefin ranges from 500 to 50,000 or higher. A preferred molecular weight range is 800 to 25,000.

This carboxylated polyolefin has the general structure

$$CH_3(CH_2CH_2)\text{-}(\underset{X}{\underset{|}{C}}H\text{-}CH_2)\text{-}(CH_2CHR)\text{-}CH_3$$

wherein X is the residue of an unsaturated acid or anhydride having 3 to 5 carbon atoms, and R is H or a hydrocarbon branch of a length to result in a molecular weight of 1000 to 1,000,000 (generally 2 to 6 carbon atoms). For example, where maleic anhydride is reacted with the polyolefin, X would be

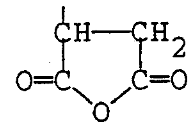

Typically, there is an average of one such X group per polymer chain.

Useful homo or copolymers of a-olefins include low molecular weight polyethylene, crystalline polypropylene, amorphous polypropylene, mixtures of crystalline and amorphous polypropylene, poly-1-butene, poly-1-pentene, poly-1-hexene and propylene copolymers with one or more higher a-olefins. Useful higher a-olefins include 1-butene, 1-pentene, 1-hexene, 1-heptene, 1-octene, 1-decene, and 4-methyl-1-pentene.

The a-olefin polymers are reacted using conventional techniques with at least one unsaturated acid or anhydride having 3 to 5 carbon atoms or a 1 to 10 carbon atom ester thereof. Preferred acids, anhydrides, or esters include maleic anhydride, succinic anhydride, dimethyl maleate, acrylic acid, methacrylic acid, and crotonic acid.

The glycol portion of the copolyester is a saturated aliphatic or cycloaliphatic glycol containing 2 to 12 carbon atoms. Preferred glycols include ethylene glycol, 1,3-propanediol, propylene glycol, 1,4-butanediol, 1,5-pentanediol, 1,6-hexanediol, 1,8-octanediol, 1,4-cyclohexanedimethanol, 1,3-cyclohexanedimethanol, 2,2-dimethyl-1,3-propanediol, 2,2,4,4-tetramethyl-1,3-cyclobutanediol, diethylene glycol, and the like.

Preferred copolyesters are prepared from terephthalic and isophthalic acid with 1,4-butanediol and 1,6-hexanediol or alternatively terephthalic acid with 1,4-butanediol and 1,6-hexanediol.

The copolyesters according to this invention are readily prepared using conventional polycondensation reaction conditions. They may be prepared by either batch or continuous processes.

Typical polyesterification catalysts which may be used include titanium alkoxides, dibutyl tin dilaurate, and combinations of zinc, manganese or magnesium acetates or benzoates with antimony oxide or antimony triacetate.

Unmodified polyolefins which are useful in the present invention include poly a-olefins, wherein the a-olefin contains 2 to 6 carbon atoms. Preferred examples include polyethylenes and polypropylenes, in particular low molecular weight polyethylenes and low molecular weight polypropylene. The unmodified polyolefin should generally have a melt index at 190° C of 4 to 2,000 g/10 minutes. Additionally, the unmodified polyolefin should have a density in the range from 0.90 to 0.96, preferably in the range from 0.91 to 0.926.

The polyester/polyolefin blends of the present invention are prepared by adding the unmodified polyolefin to the synthetic reaction mixture used for preparing the copolyester as described above. Accordingly, the acid and glycol monomer starting materials for the copolyester, including the functionalized polyolefin are combined with the unmodified polyolefin and polymerization is initiated. The polymer blends so produced may be isolated by standard polymer separation techniques.

Other features of the invention will become apparent in the course of the following descriptions of exemplary embodiments which are given for illustration of the invention and are not intended to be limiting thereof.

## EXAMPLES

### Example 1

A total of 77.6 grams (0.4 moles) of dimethyl terephthalate, 19.4 grams (0.1 moles) of dimethyl isophthalate, 80.24 grams (0.68 moles) of 1,6-hexanediol, 28.8 grams (0.32 moles) of 1,4-butanediol, and 100 ppm of titanium catalyst (titanium isopropoxide in n-butanol) are weighed into a 500-mL, single-neck, round-bottom flask equipped with a nitrogen inlet, a stirrer, a vacuum outlet, and a condenser. The flask is heated at 200° C in a Belmont metal bath for one hour with a nitrogen sweep over the reaction mixture. Then the temperature of the metal bath is increased to 210° C for one hour. When the theoretical amount of methanol has distilled from the reaction mixture, the metal bath temperature is increased to 260° C and the pressure in the flask is reduced to 0.1 mm of mercury. The flask is heated at 260° C at reduced pressure for 90 minutes. The flask is then removed from the bath and allowed to cool under a nitrogen atmosphere as the polymer solidifies. The polymer is analyzed by an NMR method. It is characterized to be a poly(hexamethylene terephthalate) copolyester containing 20 mol % isophthalic acid and 20 mol % 1,4-butanediol. The polymer has an opaque, white color and an I.V. of 0.71.

The polymer has a melt viscosity of 129,000 cp at 190° C in a Tinius Olsen melt indexer using a 2160 g weight and a die having a diameter of 0.0825 inches (0.2 cm). By DSC analysis, the polymer is found to have a melting point (Tm) of 102° C, a glass transition temperature (Tg) of 13° C, and a heat of fusion ($WH_f$) of 6.3 cal/g. A compression molded film (3 mils) of this polymer has a tensile yield strength of 1290 psi (90.7 $Kg/cm^2$), a tensile break strength of 2400 psi (168 $Kg/cm^2$), an elongation at break of 523%, and a modulus of 34,000 psi (2390 $Kg/cm^2$).

### Example 2

The procedure of Example 1 is repeated except that 3.1 g of a polyethylene wax containing grafted maleic anhydride (saponification number of 6) and having a melt viscosity of 3000 cp at 190° C is added to the reaction mixture to prepare the copolyester. The polymer has an opaque, white color and an I.V. of 0.63. This copolyester contains 2.5 weight % of chemically combined polyethylene. By DSC analysis, the polymer has a melting point (Tm) of 103° C, a Tg of 12° C, and a $WH_f$ of 7.0 cal/g. The polymer has a melt viscosity of 110,000 cp at 190° C (Brookfield Method). A compression molded film (3 mils) of this polymer has a tensile yield strength of 1680 psi (118 $Kg/cm^2$), tensile break strength of 2170 psi (152 $Kg./cm^2$), an elongation at break of 462%, and a modulus of 31,000 psi (2180 $Kg/cm^2$).

### Example 3

The procedure of Example 1 is repeated except that 6.4 g of a low density polyethylene modified with maleic anhydride (saponification number of 6) and having a melt viscosity of 3000 cp at 190° C is added to the reaction mixture to prepare the copolyester. The polymer is an opaque, white color and it has an I.V. of 0.69. It contains 5 weight % chemically combined polyethylene. By DSC analysis, the polymer has a Tm of 101° C, a Tg of 13° C, and a $WH_f$ of 6.7 cal/g. It has a melt viscosity of 173,000 cp at 190° C. A compression molded film (3 mils) of this polymer has a tensile yield strength of 1500 psi (105 $Kg/cm^2$), a tensile break strength of 2190 psi (154 $Kg/cm^2$), an elongation at break of 543%, and a modulus of 28,000 psi (1968 $Kg/cm^2$).

### Example 4

The procedure of Example 1 is repeated except that 13.5 g of a low density polyethylene wax containing grafted maleic anhydride (saponification number of 6) and having a melt viscosity of 3000 cp at 190° C is added to the reaction mixture to prepare the copolyester. The polymer has an opaque, white color, an I.V. of 0.70, and contains 10 weight % of chemically combined polyethylene. By DSC analysis, the polymer has a Tm of 101° C, a Tg of 12° C, and a $WH_f$ of 7.3 cal/g. It has a melt viscosity of 205,000 cp at 190° C. A compression

molded film (3 mils) of this polymer has a tensile yield strength of 1420 psi (100 Kg/cm$^2$), a tensile break strength of 1690 psi (119 Kg/cm$^2$), an elongation at break of 391%, and a modulus of 28,000 psi (1968 Kg/cm$^2$).

Example 5

The procedure of Example 1 is repeated except that 7.1 g of low density polyethylene containing grafted maleic anhydride (saponification number of 6) and having a melt viscosity of 3000 cp at 190°C is added to the reaction mixture. In addition, 14.3 g of a polyethylene having a density of 0.926 and a melt index at 190°C of 39 g/10 minutes is also present in the reaction mixture during the preparation of the copolyester. The polymer has an opaque, white color, an I.V. of 0.69, and a melt viscosity of 245,000 cp at 190°C. By DSC analysis, the polymer has melting points of 104° and 98°C, a Tg of 13°C, and a $WH_f$ of 8.5 cal/g. A compression molded film (3 mils) of this polymer has a tensile yield strength of 1360 psi (95 Kg/cm$^2$), a tensile break strength of 1980 psi (139 Kg/cm$^2$), an elongation of 500%, and a modulus of 23,000 psi (1617 Kg/cm$^2$).

T-peel bonds (4 x 4 inches) (10 x 10 cm) are made on a Sentinel heat sealer with 3 mil (0.08 mm) compression molded films of this poly(ester-co-olefin) product using 65/35 polyester/cotton twill fabric using a five second bonding time, 20 psig (1.4 kg/cm$^2$ gage) pressure, and a temperature of 350°F (177°C). The bonds are cooled on a stone bench top, 1/2 inch (1.27 mm) is trimmed from each side and three one-inch (2.54 cm) T-peel bonds are cut from each specimen. Bonds are tested at 23°C on an Instron tester at a crosshead speed of two inches/minute (5.1 cm/minute). The T-peel strength is 12.0 psi (0.84 Kg/cm$^2$).

Example 6

The procedure of Example 5 is repeated except that 8.1 g of the maleated polyethylene wax and 32.3 g of the high-molecular weight polyethylene are added to the reaction mixture to prepare the copolyester. The polymer has an opaque, white color, an I.V. of 0.73, and a melt viscosity of 500,000 cp at 190°C. By DSC analysis, the polymer has melting points of 104° and 113°C, a Tg of 15°C, and a $WH_f$ of 10.3 cal/g. A compression molded film (3 mils) of this polymer has a tensile yield strength of 1320 psi (93 Kg/cm$^2$), a tensile break strength of 1910 psi (134 Kg/cm$^2$), an elongation of 444%, and a modulus of 24,000 psi (1687 Kg/cm$^2$).

A polyester nonwoven web is formed by passing polyester staple fiber through a textile card machine to give a web weight of 17.5 g/yd$^2$ (20.9 g/M$^2$). A medium powder (70 to 200 mesh) of the copolyester/olefin product is fluidized with nitrogen and sprayed on the web with an electrostatic gun to give a uniform coating. The web is passed through a heating chamber of infrared heaters to fuse the adhesive powder and then through calendering rolls. The weight of adhesive on the web is 18.1 weight %. The web has a nice, soft hand and is strong and uniformly bonded in both the machine and transverse directions.

Example 7

The procedure of Example 5 is repeated except that 9.3 g of the maleated polyethylene wax and 55.9 g of the high molecular weight polyethylene are added to the reaction mixture to prepare the copolyester.

The polymer has an opaque, white color, an I.V. of 0.74, and a melt viscosity of 318,000 cp at 190°C (measured in a Melt Indexer). By DSC analysis, the polymer has melting points of 103° and 113°C, a Tg of 13°C, and a $WH_f$ of 11.2 cal/g. A compression molded film (3 mils) of this polymer has a tensile yield strength of 1160 psi (82 Kg/cm$^2$), a tensile break strength of 1700 psi (120 Kg/cm$^2$), an elongation at break of 468%, and a modulus of 22,000 psi (1547 Kg/cm$^2$).

T-peel bonds were made with this product using 65/35 polyester/cotton twill fabric by the procedure described in Example 5. The T-peel strength of this laminate is 10.1 pounds per linear inch (pli) (2.54 cm).

Example 8

The procedure of Example 5 is repeated except that 38.8 g of dimethyl terephthalate, 9.7 g of dimethyl isophthalate, 40.1 g of 1,6-hexanediol, 14.4 g of 1,4-butanediol, 10.9 g of the maleated polyethylene wax, and 32.5 g of the high-molecular weight polyethylene are added to the reaction mixture to prepare the copolyester. The polymer has an opaque, white color, an I.V. of 0.56, and a melt viscosity of 151,000 cp at 190°C (Melt Index Method). By DSC analysis, the polymer has melting points of 102° and 113°C, a Tg of 12°C, and a $WH_f$ of 12.1 cal/g. A compression molded film (3 mils) of this polymer has a tensile yield strength of 1120 psi (79 Kg/cm$^2$), a tensile break of 1130 psi (80 Kg/cm$^2$ , an elongation at break of 223%, and a modulus of 23,000 psi (1617 Kg/cm$^2$).

Example 9

A total of 77.6 g (0.4 moles) of dimethyl terephthalate, 19.4 g (0.1 moles) of dimethyl isophthalate, 6.37 g of maleated amorphous polypropylene (acid No. = 17.8, 1700 cp at 190 °C), 80.24 g (0.68 moles) of 1,6-hexanediol, 28.8 g (0.32 moles) of 1,4-butanediol, and 100 ppm of titanium catalyst (isopropoxide in n-butanol) are weighed into a 500-mL, single-neck, round-bottom flask equipped with a nitrogen inlet, stirrer, vacuum outlet, and condensing flask. The flask is heated to 200 °C in a Belmont metal bath for one hour with a nitrogen sweep over the reaction mixture. Then the temperature of the bath is increased to 210 °C for one hour. When the theoretical amount of methanol has distilled from the reaction mixture, the metal bath temperature is increased to 260 °C and the pressure in the flask is reduced to 0.1 mm of mercury. The flask is heated at 260 °C at reduced pressure for one hour and 30 minutes. The flask is then removed from the bath and is allowed to cool under a nitrogen atmosphere. Analysis of the resulting polymer by NMR indicates that it is a poly-(hexamethylene terephthalate) copolyester containing 19 mol % isophthalic acid monomer units, 21 mol % 1,4-butanediol monomer units, and 5 weight % of the maleated amorphous polypropylene. The opaque, white colored copolyester has an I.V. of 0.50. By DSC analysis, the polymer has a Tm of 103 °C and a $WH_f$ of 6.7 cal/g.

Example 10

The procedure of Example 9 is repeated except that 30 g of a crystalline polypropylene having a flow rate of 17 g/10 minutes at 230 °C (Melt Index Method), annealed density of 0.915 g/cc, and a DSC melting point of 160 °C, are added to the reaction mixture to prepare the copolyester. The polymer is an opaque, white color and the polyester portion has an I.V. of 0.55. By DSC analysis, the polymer has multiple melting points of 104° and 159 °C. Samples of polyester fabric were readily bonded at 175 °C using 3-mil films of the copolyester/olefin product.

Whenever the term "inherent viscosity" (I.V.) is used in this application, it will be understood to refer to viscosity determinations made at 25 °C using 0.50 g of polymer per 100 mL of a solvent composed of 60 weight % phenol and 40 weight % tetrachloroethane.

The "melting point" (Tm) and glass transition temperature (Tg) of the polymers described in this application are readily obtained with a Differental Scanning Calorimeter.

The "heat of fusion" $WH_f$ of polymers is the amount of heat absorbed when crystallizable polymers are melted. $WH_f$ values are readily obtained using Differential Scanning Calorimeters (Perkin-Elmer). For example, one method for determining $WH_f$ is described in Journal of Applied Polymer Science 20, 1209 (1976). Measurement of $WH_f$ is also described in Du Pont Thermal Analysis Bulletin No. 900-8 (1965). Qualitatively it is possible to compare the degree of crystallinity of polymers by comparing their $WH_f$ values.

The strength of the bonds is determined by the so-called "Peel Test" based on a modification (i.e., three test specimens) of the ASTM "T-Peel Test" set forth on pages 63 and 64 of the 1964 edition of the Book of ASTM Standards, published by the American Society of Testing Materials, and more specifically identified as Test Number D-1876-61-T.

The term "melt index" is used herein as the amount, in grams, of a thermoplastic resin which can be forced through a given orifice under a specified pressure and temperature within 10 minutes. The value should be determined in accordance with ASTM D 1238.79.

Other tests used herein are identified as follows:

Tensile Strength: ASTM-D638
Elongation: ASTM-D638
Melting Point: DSC Method
Saponification No. (SAP):
ASTM-D1387 (waxes)
ASTM-D464 (resins)
Acid Numbers: ASTM-D1386-59

Unless otherwise indicated, all parts, percentages, ratios, etc., are by weight.

The invention has been described in detail with particular reference to preferred embodiments thereof, but it will be understood that variations and modifications can be effected within the spirit and scope of the invention.

## Claims

1. A polyester/polyolefin blend composition characterized or containing:

(i) 98 to 60 weight % of a copolyester having an inherent viscosity (I.V.) of 0.3 to 1.2 and containing repeat units from 100 mol % of an acid comprising at least one aromatic, saturated aliphatic or saturated cycloaliphatic dibasic acid having 4 to 36 carbon atoms and 0.5 to 20%, based on the weight of the polyester, of a functional polyolefin having a saponification number of 75 or less, wherein said functional polyolefin is the reaction product of at least one homopolymer or copolymer of an a-olefin having 2 to 10 carbon atoms and at least one unsaturated acid or anhydride having 3 to 5 carbon atoms or a 1 to 10 carbon atom alkyl ester thereof,

and repeat units from 100 mol % of at least one aliphatic or cycloaliphatic glycol having 2 to 12 carbon atoms.

(ii) 2 to 40 weight % of an unmodified polyolefin.

2. The composition of Claim 1, wherein said unmodified polyolefin has a density of 0.90 to 0.96.

3. The composition of Claim 1, wherein said functionalized polyolefin has a saponification number of 5-50.

4. The composition of Claim 1, wherein said dibasic acid is selected from the group consisting of isophthalic, terephthalic, 1,4-cyclohexanedicarboxylic, 1,3-cyclohexanedicarboxylic, 1,2-cyclohexanedicarboxylic, glutaric, adipic, pimelic, suberic, azelaic and sebacic acids.

5. The composition of Claim 1, wherein said glycol is selected from the group consisting of ethylene glycol, 1,3-propanediol, propylene glycol, 1,4-butanediol, 1,5-pentanediol, 1,6-hexanediol, 1,8-octanediol, 1,4-cyclohexanedimethanol, 1,3-cyclohexanedimethanol, 2,2-dimethyl-1,3-propanediol, 2,2,4,4-tetramethyl-1,3-cyclobutanediol, and diethylene glycol.

6. The composition of Claim 1, wherein said dibasic acid is a mixture of terephthalic and isophthalic acids and said glycol is a mixture of 1,4-butanediol and 1,6-hexanediol.

7. The composition of Claim 1, wherein said dibasic acid is terephthalic acid and said glycol is a mixture of 1,4-butanediol and 1,6-hexanediol.

8. The composition of Claim 1, wherein said unmodified polyolefin is a polyethylene or polypropylene.

9. The composition of Claim 1, wherein said unsaturated acid or anhydride is selected from the group consisting of maleic anhydride, succinic anhydride, dimethyl maleate, acrylic acid, methacrylic acid, and crotonic acid.

European Patent Office

# EUROPEAN SEARCH REPORT

Application Number

EP 89 42 0507

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| D,Y | US-A-4 299 933 (McCONNELL et al.)<br>* Claims 1-12 *<br>--- | 1-9 | C 08 L 67/00 //<br>(C 08 L 67/00<br>C 08 L 23:02 ) |
| Y | US-A-4 046 837 (CARROLL, Jr.)<br>* Claims 1-3 *<br>--- | 1-9 | |
| A | EP-A-0 044 616 (I.C.I.)<br>* Claims 1-10 *<br>--- | 1 | |
| A | US-A-3 769 260 (L. SEGAL)<br>* Claims 1-10 *<br>--- | 1 | |
| A | DE-B-2 328 917 (KURARAY CO.)<br>* Claims 1-10 *<br>----- | 1 | |

TECHNICAL FIELDS SEARCHED (Int. Cl.5)

C 08 L
D 04 H
D 06 M

The present search report has been drawn up for all claims

| Place of search | Date of completion of the search | Examiner |
|---|---|---|
| THE HAGUE | 25-04-1990 | DECOCKER L. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document